# EUROPEAN PATENT APPLICATION

(11) **EP 2 468 837 A1**
(43) Date of publication of application: **27.06.2012**
(21) Application number: 10015884.9
(22) Date of filing: 21.12.2010
(51) Int. Cl.: C10B 25/16, C10B 29/06

(54) **Method and device for assessing through-wall leakage of a heating wall of a coke oven**

(71) Applicant: Tata Steel UK Limited, London SW19 4WY (GB)
(72) Inventor: Saiepour, Mansour, 1970 CA Ijmuiden (NL)
(74) Representative: Blauw, Frans Gerard

(57) **Abstract**

The invention relates to a method and a device for assessing through-wall leakage and combustion problems of a heating wall of a coke oven (20) by measuring gas components and dust of combustion waste gases exiting the heating walls (Wall 20, Wall 21) of the coke oven, wherein components of combustion waste gases are measured simultaneously from both heating walls of a coke oven. The device for measuring the components of the waste gases is a self contained unit with measuring devices in a temperature regulated closable housing.

## Description

The invention relates to a method and a device for assessing through-wall leakage of a heating wall of a coke oven.

A coke oven plant comprises one or more batteries each with a number of coke ovens. Each coke oven is heated from both sides by means of heated walls, wherein the heated walls have a number of flues that are used as heating flue and/or exhaust flue. In the coke oven process, the coke oven is filled with an amount of coal, the coal is heated to a high temperature in an oxygen deficient atmosphere to form coke which at the end of the process is removed from the oven, after which the process starts again with a new charge of coal. The coke can be used in a blast furnace to make iron for the steel production. In most cases the heat in the heating flue is provided by the combustion of fuel gas.

The walls of a coke oven are made of silica brick refractory which because of high temperatures and changing conditions with charging coal and removing coke from the oven may after time start to show cracks or holes. These cracks and holes are often at the location of the flues in the oven wall, where the wall thickness is less than it is in between the flues. Because of that the gases resulting from the carbonisation process can leak to the flues resulting in an incomplete combustion process in the heating flues and which in turn may result in emission of gas components above the allowable maximum values. Also carbon particles may leak from the oven chamber to the flues resulting in visible black smoke from the stack, which is a clear indication of through-wall leakage. However, this is far too late and probably the emissions have already been over the maximum limit for some time.

In order to assess the state of coke oven walls several methods are applied including sampling stack emissions, camera inspection of oven walls, inspection of heating flues using cameras and pyrometers and individual wall waste gas analysis. These known methods are not always possible, do not give enough information or require specialized equipment and personnel.

It is an objective of the invention to provide a method to analyse the waste gases of both walls of a coke oven simultaneously.

It is a further objective of the invention to provide a method to measure gas components for determining through-wall leakage.

It is still a further objective of the invention to provide a method which allows to determine easily which of the walls of a coke oven is leaking.

It is an objective of the invention to provide a method with which the combustion of the gases in the heating flues can be checked.

It is still a further objective of the invention to provide a method with which the dust component in the exhaust gases can be determined.

It is another objective of the invention to provide a device with which the waste gases of both walls of a coke oven can be analysed simultaneously.

It is another objective of the invention to provide a device with which the dust component in coke oven waste gases can be determined.

It is still a further objective of the invention to provide a device for analysing the waste gases of a coke oven heating wall which is suitable to be used in the environment of a coke oven plant.

According to a first aspect of the invention one or more of these objectives are realized by providing method for assessing through-wall leakage of a heating wall of a coke oven by measuring components of combustion waste gases exiting the heating walls of the coke oven, wherein components of combustion waste gases are measured simultaneously from both heating walls of a coke oven. Since a coke oven is heated from walls on both sides of the oven it is essential to separately measure components of the waste gases of both walls in order to be able to determine if through-wall leakage is taking place in that particular oven and if so which of the heating walls is causing the through-wall leakage. This could be one heating wall or both heating walls of a single coke oven. Early detection of through-wall leakage enables timely repair and maintenance, which controls emissions, reduces costs and extends coke oven life, respectively battery life.

According to a further aspect of the invention it is provided that the components of the combustion waste gases are measured during charging of the coke oven. The amount of leakage depends on the pressure in the coke oven and the number and size of cracks and holes in one or both walls of a coke oven. It is believed that during the carbonisation process the cracks and holes may partly be filled with carbon deposits which results in a decrease of through-wall leakage during the carbonisation process. Moreover, the pressure in the coke oven, after an increase in the first 2 - 4 hours, will decrease in the course of the process which also will result in a decrease of through-wall leakage. For that reason according to the invention measurements are done during charging of the coke oven.

It was found that during charging of the coke oven with a new load of coal a number of components in the waste gases can be used to determine if there is through-wall leakage and how serious a specific through-wall leakage is. By measuring components of the waste gases over a period of time extending from before the discharge of coke from the oven and charging the oven with a new load of coal until after the said charging further relevant data might be obtained concerning through-wall leakage. Also the ratios between the amounts measured before and after the charging of the oven and the amounts measured during charging can be determined which can also be used for determining through-wall leakage.

According to a further aspect of the invention the carbon monoxide (CO) content of the waste gases is measured. It has appeared that the CO content with through-wall leakage increases considerably not only with respect to normal values during the carbonisation process but also with respect to the normal value during charging of the coke oven. With normal values it is meant those values that are measured for coke oven walls with leakage below a certain acceptable limit.

According to a further aspect of the invention the methane (CH₄) content of the waste gases is measured. The CH₄ content like the CO content shows a considerable increase with through-wall leakage during charging of the oven.

The CO gas is the result of incomplete combustion in the affected flue and CH₄ originates directly from the heating of the new charge of coal in the coke oven and both are good indicators of through-wall leakage.

According to still a further aspect of the invention the oxygen (O₂) content of the waste gases is measured. With through-wall leakage the O₂ content which normally would still be in the waste gases from the heating flues will be considerably lower to even zero because of reaction with the gases leaking from the coke oven.

According to the method also other components are measured such as the nitrogen oxides (NOₓ) content which gives information about the combustion process in the heating flue and can be used to adjust the admixture of for instance fuel gas and air of the combustion process.

According to still a further aspect of the invention also the dust content of the waste gases is measured which gives an indication of through-wall leakage and the extent of its severity.

In coke oven battery designs with regenerative heating systems the combustion exhaust gases flow through the regenerator and heat it up, and then reversal occurs and air flows through the same regenerator and heats up by taking heat from it. The flues in a coke oven are connected as twin flues and in particular a heating flue is connected to an exhaust flue. In a particular configuration the inlets of the heating flues are connected to a regenerator duct for the supply of air and the outlets of the exhaust flues are connected to another duct connected to the stack of that particular battery of coke ovens or of the coke oven plant. With this configuration the waste gases in the waste gas ducts of both walls are measured simultaneously to determine if there is any through-wall leakage of the walls of a particular coke oven.

In other coke oven plants each heating wall of a coke oven has a number of connected twin flues and each flue of the twin flues is alternately used as combustion/heating flue and exhaust flue, wherein each flue of the connected twin flues is connected to a different duct of two regenerator ducts. The invention provides that in these configurations the measurement of components of combustion waste gases is alternately switched from one regenerator duct to the other.

With the method according to the invention it is of importance that the measurements in both exhaust gas ducts are carried out in the same manner. To this end the invention provides that the same probes are used to sample the waste gases and that the same amounts of exhaust gases from both ducts are taken simultaneously to provide reliable dust measurements.

According to a further aspect of the invention also a device is provided for measuring components of combustion waste gases exiting the heating walls of a coke oven, wherein the device to measure simultaneously the components of the waste gases of both walls of a coke oven is provided with at least two sampling lines, each line comprising a sampling tube and means to heat the sampling tube, heated filters connected to each sampling tube, gas cooling means for the sampling lines, separate pumping means for each line and separate gas analysers for each line.

To measure the waste gases of both walls of a coke oven at least two sampling lines are needed. With the configuration wherein the flues are alternately used as heating flue and exhaust flue it is necessary to switch from one regenerator duct to the other regenerator duct. With a device with two sampling lines this can be done by connecting the sampling lines to the other duct when the use of the flues is changed. In practice this means that with this set-up the sampling lines have to be changed every 10-30 minutes and on average every 20 minutes or so depending on the total time of the coke oven process.

According to another embodiment it is provided that for the configuration with alternate use of each flue of the twin-flues the device is provided with four sampling lines which are each used only when the particular regenerator duct to which the sampling tube is connected is used as waste gas duct.

According to another embodiment four sampling tubes are provided which are connected to the regenerator ducts and are alternately connected to two sampling lines of the device.

However, since an operator is needed to connect the sampling tubes of the device to the waste gas ducts of every next coke oven and to carry out the measurements a device with two sampling tubes and two sampling lines is the most cost effective embodiment. Since this device can also be smaller than a device with four sampling lines and for that reason is also easier to handle this embodiment and will be preferable in most situations.

The sampling tubes are preferably connected to probes that extend over a certain distance into a regenerator duct that is used as waste gas duct to be sure to sample in an area with regular flow. According to a further aspect of the invention the probes are fixed into waste gas boxes and connected to the regenerator ducts and are provided at the end outside the regenerator duct with connecting means to connect a sampling tube to the probe. When not in use the probe can be closed off to avoid exhaust gas escaping the waste gas duct via the probe.

With a configuration wherein the flues are used alternately as heating flue and exhaust flue the regenerator ducts that connect to the flues also connect at the other end to a main waste gas duct by means of a so called "waste gas box". With this waste gas box a regenerator duct is connected to the main waste gas duct or the connection to the main waste gas duct is closed off and an inlet for air is opened. Since these waste gas boxes are easily accessible for maintenance and often accessible from a long corridor within the building of a coke oven battery these are also the ideal place to locate the probes. Because of turbulent flow in the waste gas boxes the probes should have a certain length with the outer end in the regenerator duct at a distance from the waste gas box.

According to a further aspect of the invention the heated filters, the gas cooling means, pumping means and the separate gas analysers are accommodated in a closable housing. Since the environment wherein the measurements have to be carried out is hot and often dirty it is of importance to protect the instruments from that environment.

According to a further aspect of the invention the housing is provided with temperature regulation means. Apart from separating the instruments from the hot and dirty environment it is also important that the temperature inside the housing is kept at a constant level and below a certain temperature limit. With these features the conditions inside the housing are equal for all measurements which allows to compare measurements done at successive coke ovens or coke ovens of another battery of coke ovens.

According to still a further aspect of the invention the heated filters are connected to the outlets of the respective sampling tubes. This feature allows to mount the heated filter inside the housing which for the above mentioned reasons is important. The sampling tubes and means to heat the sampling tubes are outside the housing for the greater part thereof and only a small part needed to connect to the heated filter is inside the housing.

The sampling tubes are each provided with dust monitor means. The dust monitor comprises optical dust measuring means which are preferably provided at the end of the sampling tube just before the connection means with which the sampling tube connects to a probe. Optical dust measurement means are preferred since these do not disturb the flow of the waste gases in the sampling line. The dust monitor means further comprise data processor means. A data line connects the optical dust measurement means to the data processor means inside the housing.

Since comparison of the measurements from both heating walls of a coke oven can only be done properly if the same amount of exhaust gas goes through each sampling line flow control means are provided to regulate the separate pumping means for each line. The flow control means are constantly monitored and adjusted to keep the same gas flow through both sampling lines.

Data logging means for all measurements are provided in the housing preferably with control and monitor means therefore in a separate second housing that is accessible from outside the housing.

The housing is provided with transport means which in the most cost effective embodiment comprises a number of wheels so that the device can be wheeled along the exhaust ducts or gas waste boxes of the successive coke ovens of a battery of coke ovens. It may also be provided that part of the wheels are driven by electrical drive means.

The invention will further be elucidated on hand of the examples given in the drawings, wherein:
- fig. 1: shows schematically fuel gas and combustion air inlets and waste gas outlets of a coke oven;
- fig. 2: shows schematically a top view at different levels of a number of coke ovens with heating walls and flues in the heating walls;
- fig. 3: shows schematically a diagram of the device for measuring components in the waste gas from heating walls of a coke oven;
- fig. 4: shows schematically a layout of a closable housing for the measuring device with the arrangement of the instruments inside the housing;
- fig. 5: shows a table and plot with data from a heating wall with low leakage;
- fig. 6: shows a table and plot with data from a heating wall with high leakage, and
- fig. 7: shows a plot of waste gas dust measurements from four heating walls.

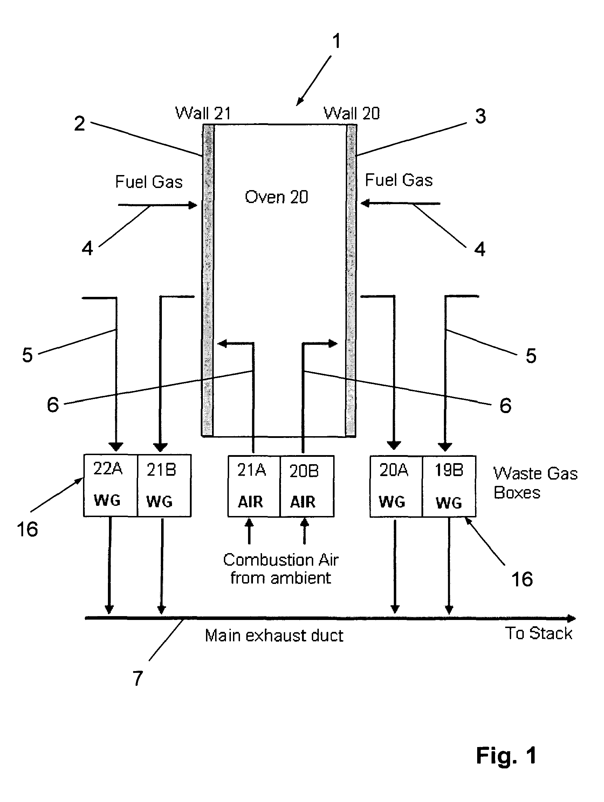

In fig. 1 schematically a coke oven 1 with heating walls 2, 3 is shown with a fuel supply 4, waste gas outlets 5 and air inlets 6. The air inlets 6 and fuel gas supply 4 connect to the flues in walls 2, 3 that are used as heating flues and the waste gas outlets 5 to the exhaust flues. In this example the flues of the twin connected flues are alternately used as heating flue and exhaust flue. For that reason the waste gas outlets 5 and air inlets 6 connect via waste gas boxes 16 to a main waste gas duct 7 and outside air respectively. The waste gas boxes 16 alternately connect waste gas outlets 5 and air inlets 6 to the main waste gas duct 7 and the outside air so that a gas outlet becomes an air inlet and vice versa.

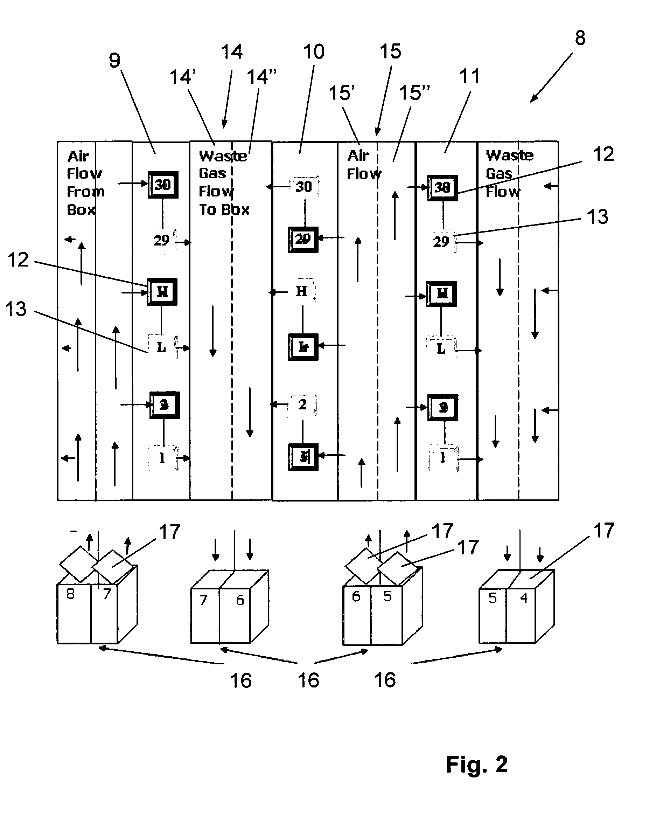

Fig. 2 shows part of a coke oven battery 8 with vertical heating walls 9, 10, 11 each provided with a number of flues alternately used as heating flue 12 and exhaust flue 13. Between the heating walls 9, 10, 11 at a level below the bottom of the actual oven part regenerator ducts 14, 15 are provided that are alternately used for the supply of air that is heated by the regenerator to the heating flues 12 and as waste gas duct for the waste gas of the exhaust flues 13 which heats up the regenerator. The ducts 14, 15 can be single ducts and used for the flues 12, 13 of two adjacent heating walls 9, 10, 11 or can be separate ducts 14', 14" and 15', 15" each used for a single heating wall. The regenerator ducts 14, 15 connect via waste gas boxes 16 to either a main waste gas duct 7 or to the outside air. In the latter position the covers 17 of the waste gas boxes 16 are opened and the connection to the main waste gas duct is closed off. In the other position the covers 17 are closed and the connection to the main waste gas duct is opened.

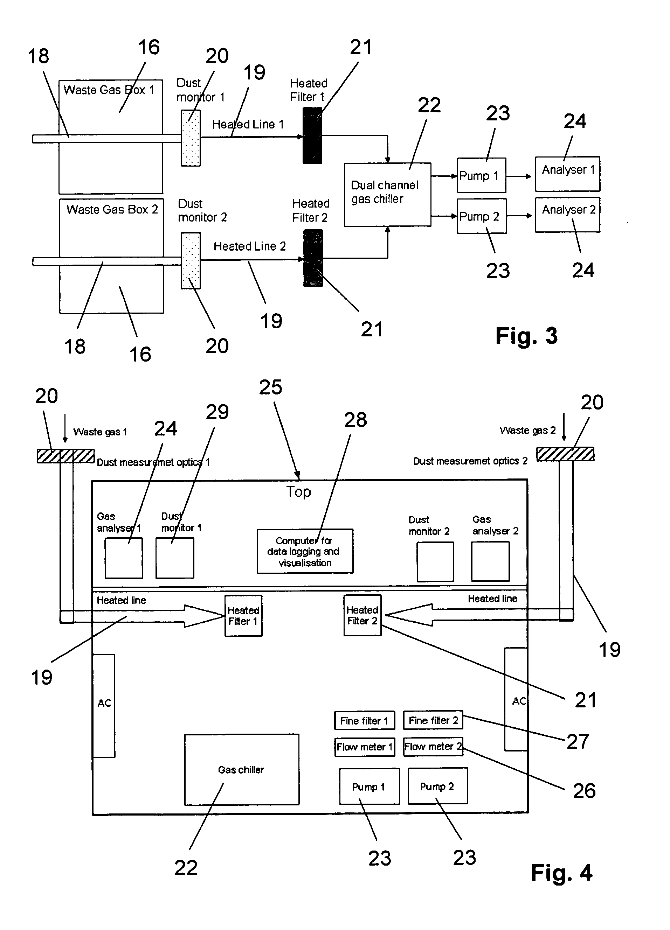

In the diagram of fig. 3 waste gas boxes 16 are shown which are provided with probes 18 that extend far enough into a regenerator duct to be outside the turbulent flow in or near the waste gas boxes 16. At the end of sampling tube 19 where it connects to the probe optical dust measuring means 20 are provided. Data processor means 29, the other part of the dust monitor means, are provided in a special closable housing, see fig.4.

The sampling tube 19 is a heated tube for which electrical heating means are used and the heated tube is provided with an insulating and protecting sleeve. The protective sleeve is also used to protect data and power supply lines to and from the optical dust measuring means 20.

The heated sampling tube 19 connects to a heated filter 21 after which the sampling line connects to a dual channel gas chiller 22. After the gas chiller 22 a pump 23 and a gas analyser 24 are provided in the sampling line.

The heated dust filter 21 could also be placed at the inlet of the heated sampling tube 19, however in this application it has been placed at the outlet thereof so that it can be positioned inside the self-contained unit 25, see fig.4, for compactness and avoidance of additional electrical supplies outside the container. The heated tube sampling line is especially selected to be easily replaceable in case of blockage with dust. The electrical heating means for the heated tube 19 are connected to a power supply within the housing 25.

Fig. 4 shows schematically a layout of a closable housing 25 for the measuring device with only the dust measurement optics 20 and most of the heated sampling tube 19 outside the housing 25. In the housing are all other instruments described above and flow meters 26 and fine filters 27 in the sampling line before the pump 23.

Inside the housing 25 air-conditioning means are provided to regulate the temperature inside the housing.

The pumps 23 need to be regulated constant flow rate to ensure that:
a) the flow rate through the dust monitor optical device 20 does not fluctuate, which causes measurement errors;
b) an equal amount of gas flows through both dust monitor optical devices 20 to obtain a correct and reliable comparison;
c) the flow rate through the optical devices is not reduced below the minimum value required for the gas to jump across the optical device air gap without dispersing and hence contaminating the optics.

Further means for data logging and visualisation 28 are provided that are preferably placed in a separate housing on top of the housing 25 to allow easy access and operation.

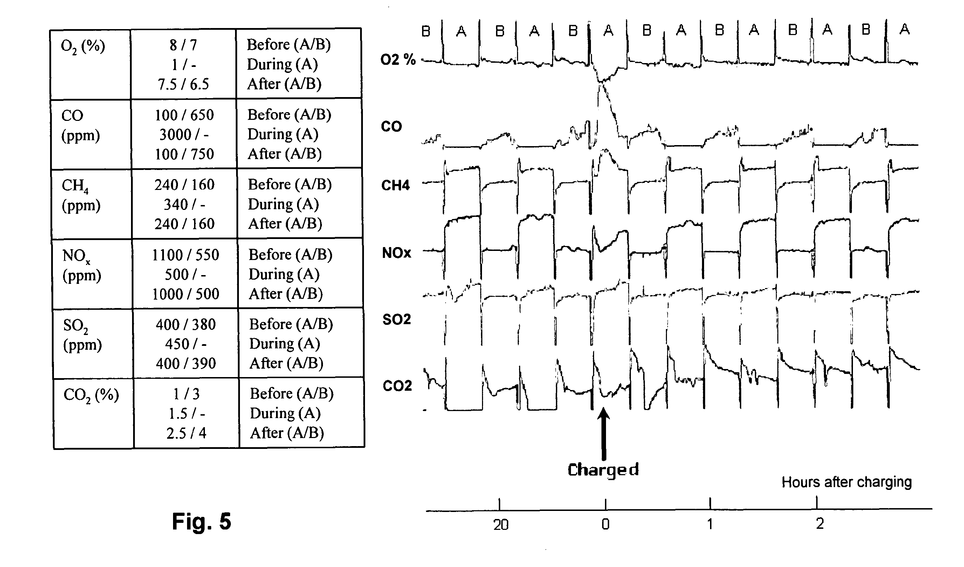

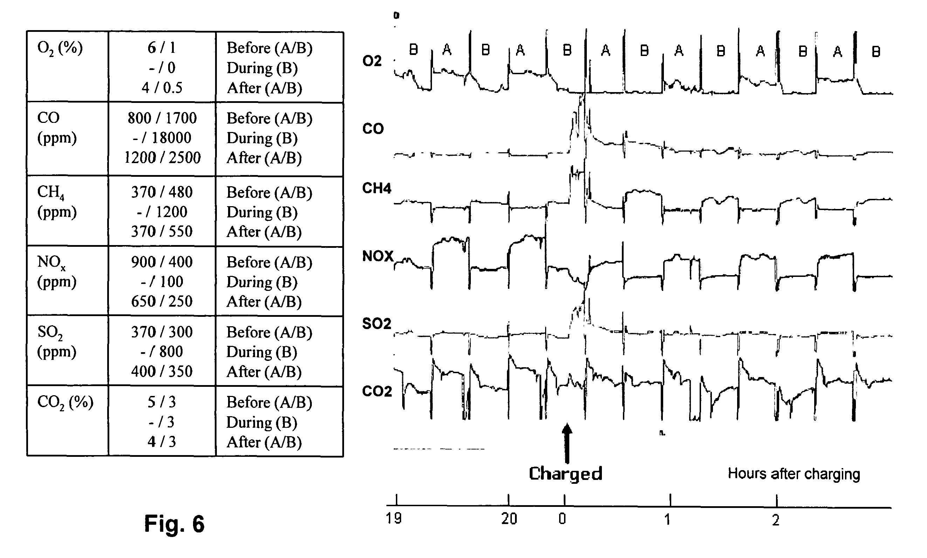

In fig. 5 and 6 the data and plot of the measurements of a heating wall with low leakage and a heating wall with high leakage are shown respectively. The heating walls of a coke oven will start to show leakage after a certain period of its life time, however, it is only above a certain level of leakage that through-wall leakage becomes serious.

The data and plot according to fig. 5 show the results of the measurements of the waste gases alternately exiting from two sides A and B of an oven wall before, during and after oven charging. A distinct increase in CO and CH₄, and decrease in O₂ (top three traces) can be seen during charging. These values reached 3000 ppm, 340 ppm and 1% respectively. The values before and after charging can be seen in the Table and are regarded as close to normal values. This behaviour would be expected from an oven with an insignificant amount of through-wall leakage. The blockage of any wall cracks by carbon deposits (explained above) may have further reduced the amount of leakage before and after charging.

The data and plot according to fig. 6 show the results of the measurements of the waste gases alternately exiting from two sides A and B of an oven wall before, during and after oven charging. A distinct increase in CO and CH₄, and decrease in O₂ (top three traces) can be seen during charging. These values reached 18000 ppm, 1200 ppm and zero respectively. The values before and after charging can be seen in the Table and are higher than normal values. The perturbation in measured concentrations, particularly of O₂ and CO, is evident for several hours after charging, suggesting that through-wall leakage may be significantly affecting emissions. This behaviour would be expected from an oven with a significant amount of through-wall leakage.

The interference of the leaked raw coke oven gas can cause incomplete combustion in heating flue, which results in the emission of soot (carbon particles) as well as CO. Therefore, a different set of measurements was carried out to monitor dust emissions in the waste gas at the waste gas boxes 16 during charging that would be the result of through-wall leakage.

The waste gases extracted from both sides of the individual walls were monitored by inserting two probes 18 into the appropriate waste gas boxes 16. Two high range dust monitors 29 were used including dust monitor optical devices 20 equipped with clean lens adaptors to provide a laminar flow of the waste gas which will jump the air gap at the light beam without the loss of particles and contamination of the optics. In order to achieve this effect, the pump 23 provides the required minimum and constant flow rate in each sampling line. The pump 23 and flow meters 26 are protected against dust, moisture and high temperatures by filtering and cooling downstream of the measurement point. At the same time, the waste gas temperature can be measured by attaching thermocouples to the probes 18.

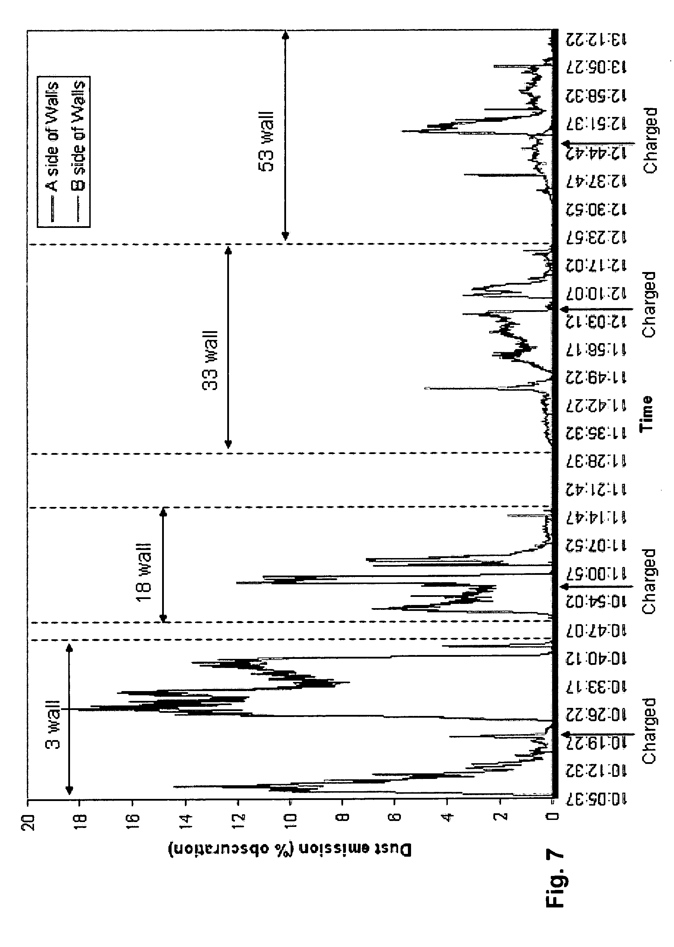

Figure 7 shows the results of four different measurements of the waste gas dust at the waste gas boxes 16 of four heating walls before, during and after oven charging. The units for the vertical axis are calculated such that 100% obscuration is equal to the dust monitor full scale output. The time at which each oven was charged is indicated by an arrow. It can be seen that:
● the amount of dust emitted was different and distinguishable for different walls;
● charging caused the amount of dust emission in two of the walls (3 and 18) to suddenly increase.

These trials have shown that indicative measurements of dust emission during charging can be made, which would provide additional information on the effect of through-wall leakage on emissions and can be related to the waste gas analysis measurements.

## Claims

1. Method for assessing through-wall leakage of a heating wall of a coke oven by measuring components of combustion waste gases exiting the heating walls of the coke oven, wherein components of combustion waste gases are measured simultaneously from both heating walls of a coke oven.

2. Method according to claim 1, wherein the components of the combustion waste gases are measured during charging of the coke oven.

3. Method according to claim 1 or 2, wherein the CO content of the waste gases is measured.

4. Method according to one or more of claims 1-3, wherein the CH₄ content of the waste gases is measured.

5. Method according to one or more of claims 1-4, wherein the O₂ content of the waste gases is measured.

6. Method according to one or more of claims 1-5, wherein the NOₓ content of the waste gases is measured.

7. Method according to one or more of claims 1-6, wherein the dust content of the waste gases is measured.

8. Method according to one or more of claims 1-7, wherein each heating wall has a number of connected twin flues and each flue of the twin flues is alternately used as combustion flue and exhaust flue, wherein each flue of the connected twin flues is connected to a different duct of two regenerator ducts and wherein the measurement of components of combustion waste gases is alternately switched from the one to the other regenerator duct.

9. Device for measuring components of combustion waste gases exiting the heating walls of a coke oven, wherein the device to measure simultaneously the components of the waste gases of both walls of a coke oven is provided with at least two sampling lines, each line comprising a sampling tube and means to heat the sampling tube, heated filters connected to each sampling tube, gas cooling means for the lines, separate pumping means for each line and separate gas analysers for each line.

10. Device according to claim 9, wherein the heated filters are connected to the outlets of the respective sampling tubes.

11. Device according to claim 10, wherein each sampling tube is provided with dust monitor means.

12. Device according to one or more of claims 9-11, wherein flow control means are provided to regulate the separate pumping means for each line.

13. Device according to one or more of claims 9-12, wherein the heated filters, the gas cooling means, pumping means and the separate gas analysers are accommodated in a closable housing.

14. Device according to claim 13, wherein the housing is provided with temperature regulation means.

15. Device according to one or more of claims 9-14, wherein the housing is provided with transport means.
